# EUROPÄISCHE PATENTANMELDUNG

(11) **EP 2 907 634 A1**
(43) Veröffentlichungstag der Anmeldung: **19.08.2015**
(21) Anmeldenummer: 14155132.5
(22) Anmeldetag: 14.02.2014
(51) Int. Cl.: B27B 9/02

(54) **Gehrungswinkelanschlag**

(71) Anmelder: HILTI Aktiengesellschaft, 9494 Schaan (LI)
(72) Erfinder: Baxivanelis, Konstantin, 86916 Kaufering (DE)
(74) Vertreter: Hilti Aktiengesellschaft Corporate Intellectual Property

(57) **Zusammenfassung**

Vorrichtung zur Einstellung des Gehrungswinkels einer Werkzeugmaschine, insbesondere einer Kreissäge, enthaltend Klemmbock mit wenigstens einem Langloch; und Schwenkhebel, an dem die Werkzeugmaschine montierbar ist und der um einen Schwenkpunkt gelagert relativ zum Klemmbock zwischen einen minimalen Gehrungswinkel und einem maximalen Gehrungswinkel schwenkbar ist,

Das Langloch enthält wenigstens zwei versetzt zueinander positionierte Anschlagelemente. Es ist ein Einstellmechanismus mit einem Hebelelement zur Auswahl eines maximalen Gehrungswinkels vorgesehen, wobei das Hebelelement ein Gegenanschlagelement enthält, welches entsprechend der Drehausrichtung des Hebelelements so ausrichtbar ist, dass das Gegenanschlagelement an das jeweilige Anschlagelement entsprechend dem ausgewählten maximalen Gehrungswinkel anschlagbar ist, wodurch die Schwenkbewegung des Schwenkhebels relativ zum Klemmbock zur Einstellung des maximalen Gehrungswinkels begrenzbar ist.

## Beschreibung

Die vorliegende Erfindung betrifft Vorrichtung zur Einstellung des Gehrungswinkels einer Werkzeugmaschine, insbesondere einer Kreissäge, enthaltend einen Klemmbock mit wenigstens einem Langloch; und einen Schwenkhebel, an dem die Werkzeugmaschine montierbar ist und der um einen Schwenkpunkt gelagert relativ zum Klemmbock zwischen einen minimalen Gehrungswinkel und einem maximalen Gehrungswinkel schwenkbar ist.

Bei einer Vielzahl an Werkzeugmaschinen ist es vorteilhaft, dass der Winkel zwischen einer im Wesentlichen horizontalen Führungsebene der Werkzeugmaschine und einer im Wesentlichen vertikalen, d.h. im rechten Winkel zur horizontalen Führungsebene stehenden Arbeitsebene des Werkzeugs veränderbar ist. Insbesondere bei Kreis- oder Stichsägen stellt die Winkelveränderung bzw. Winkeleinstellung der vertikalen Arbeitsebene des Sägeblatts in Bezug auf die horizontale Führungsebene der Säge ein bedeutendes Merkmal dar. Diese Einstellmöglichkeit ist insbesondere für die Auswahl des Gehrungswinkels wichtig.

Eine Winkeleinstellvorrichtung zur Verwendung an einer Werkzeugmaschine, insbesondere an einer Kreissäge, gemäss dem Stand der Technik ist in der US-Patentschrift 5,433,008 offenbart. Insbesondere zeigt die US 5,433,008 eine Kreissäge mit einem Motorgehäuse und einer Grundplatte. In der Grundplatte befindet sich eine Aussparung, durch welche ein kreisförmiges Sägeblatt geführt ist. Das Sägeblatt wird mittels eines Motors angetrieben. Das Motorgehäuse mit samt dem Sägeblatt kann über eine Winkeleinstellvorrichtung relativ zu der Grundplatte geschwenkt und gesichert werden. Die Winkeleinstellvorrichtung besteht dabei aus einem Klemmbock mit einem gebogenen Langloch sowie einer länglichen Schwenkeinrichtung. Der Klemmbock ist fest mit der Grundplatte verbunden und die Schwenkeinrichtung ist mit dem Motorgehäuse und dem Sägeblatt fest verbunden. Die Schwenkeinrichtung kann über einen Schwenkpunkt relativ zu dem Klemmbock geschwenkt werden kann, so dass der Winkel zwischen dem Motorgehäuse und dem Sägeblatt verändert werden kann. Mit Hilfe eines Drehelements, der einen Schaft mit einer Aussparung enthält, kann der maximale Schwenkbereich der Schwenkeinrichtung erhöht oder verringert werden.

Nachteilig an dieser Winkeleinstellvorrichtung gemäss dem Stand der Technik sind die relativ komplexe Bauweise sowie die ungenaue Einstellmöglichkeit des maximalen Schwenkbereichs (d.h. maximaler Gehrungswinkel) für die Werkzeugmaschine.

Es ist daher Aufgabe der vorliegenden Erfindung eine verbesserte Winkeleinstellvorrichtung bereitzustellen, durch welche die oben genannten Probleme beseitigt werden und die insbesondere eine weniger komplexe Bauweise aufweist.

Die vorstehend genannte Aufgabe wird durch den erfindungsgemässen Gegenstand des unabhängigen Anspruchs 1 gelöst. Weitere vorteilhafte Ausgestaltungen der vorliegenden Erfindung sind in den abhängigen Ansprüchen beschrieben.

Demnach wird eine Vorrichtung zur Einstellung des Gehrungswinkels bereitgestellt zur Verwendung an einer Werkzeugmaschine, insbesondere einer Kreissäge, enthaltend einen Klemmbock mit wenigstens einem Langloch; und einen Schwenkhebel, an dem die Werkzeugmaschine montierbar ist und der um einen Schwenkpunkt gelagert relativ zum Klemmbock zwischen einen minimalen Gehrungswinkel und einem maximalen Gehrungswinkel schwenkbar ist.

Erfindungsgemäss ist vorgesehen, dass das Langloch wenigstens zwei versetzt zueinander positionierte Anschlagelemente enthält sowie ein Einstellmechanismus mit einem Hebelelement zur Auswahl eines maximalen Gehrungswinkels vorgesehen ist, wobei das Hebelelement ein Gegenanschlagelement enthält, welches entsprechend der Drehausrichtung des Hebelelements so ausrichtbar ist, dass das Gegenanschlagelement an das jeweilige Anschlagelement entsprechend dem ausgewählten maximalen Gehrungswinkel anschlagbar ist, wodurch die Schwenkbewegung des Schwenkhebels relativ zum Klemmbock zur Einstellung des maximalen Gehrungswinkels begrenzbar ist. Durch die Kombination des Hebelelements mit dem Gegenanschlagelement in dem Einstellmechanismus kann auf platzsparende Weise der maximale Gehrungswinkel einfach eingestellt werden.

Gemäss einer weiteren vorteilhaften Ausgestaltungsform der vorliegenden Erfindung kann vorgesehen sein, dass der Einstellmechanismus ein Anzeige- und Begrenzungselement enthält, welches eine Anzeigenskala sowie eine längliche Aussparung enthält, wobei die Anzeigenskala zur Anzeige der wählbaren maximalen Gehrungswinkel dient und die längliche Aussparung zur Führung sowie Begrenzung der Drehbewegung des Gegenanschlagelements dient. Durch die längliche Aussparung kann effektiv verhindert werden, dass das Gegenanschlagelement aus Versehen zu weit, d.h. aus dem Bereich der zu wählenden maximalen Gehrungswinkel, gedreht wird.

Die vorliegende Erfindung wird bezüglich vorteilhafter Ausführungsbeispiele näher erläutert, hierbei zeigt
- Fig. 1: eine perspektivische Ansicht auf eine Werkzeugmaschine mit der erfindungsgemässen Vorrichtung zur Einstellung des Gehrungswinkels in einer waagerechten Ausrichtung;
- Fig. 2: eine perspektivische Vorderansicht auf die erfindungsgemässe Vorrichtung zur Einstellung des Gehrungswinkels;
- Fig. 3: eine perspektivische Rückansicht auf die erfindungsgemässe Vorrichtung zur Einstellung des Gehrungswinkels;
- Fig. 4: eine perspektivische Vorderansicht auf die erfindungsgemässe Vorrichtung zur Einstellung des Gehrungswinkels ohne Hebelelement;
- Fig. 5: eine perspektivische Vorderansicht auf die erfindungsgemässe Vorrichtung zur Einstellung des Gehrungswinkels ohne Einstellmechanismus;
- Fig. 6: eine perspektivische Vorderansicht auf das Hebelelement;
- Fig. 7: eine perspektivische Rückansicht auf das Hebelelement;
- Fig. 8: eine perspektivische Vorderansicht auf das Anzeige- und Begrenzungselement;
- Fig. 9: eine perspektivische Rückansicht auf das Anzeige- und Begrenzungselement;
- Fig. 10: eine Vorderansicht auf das Anzeige- und Begrenzungselement zusammen mit dem Hebelelement;
- Fig. 11: eine Rückansicht auf einen Schwenkhebel zusammen mit dem Anzeige- und Begrenzungselement;
- Fig. 12: eine Vorderansicht auf die Vorrichtung zur Einstellung des Gehrungswinkels in einer 22,5° Einstellung;
- Fig. 13: eine Rückansicht auf die Vorrichtung zur Einstellung des Gehrungswinkels in einer 22,5° Einstellung;
- Fig. 14: eine Vorderansicht auf die Vorrichtung zur Einstellung des Gehrungswinkels in einer 45° Einstellung;
- Fig. 15: eine Rückansicht auf die Vorrichtung zur Einstellung des Gehrungswinkels in einer 45° Einstellung;
- Fig. 16: eine Vorderansicht auf die Vorrichtung zur Einstellung des Gehrungswinkels in einer 50° Einstellung; und
- Fig. 17: eine Rückansicht auf die Vorrichtung zur Einstellung des Gehrungswinkels in einer 50° Einstellung.

### AUSFÜHRUNGSBEISPIELE

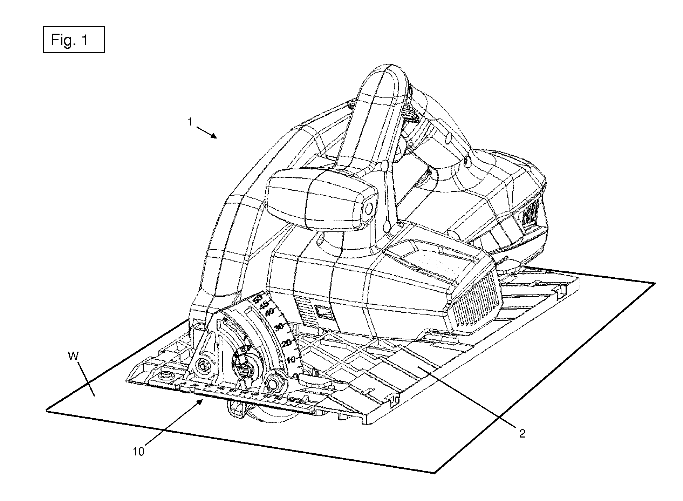

Fig. 1 zeigt eine Werkzeugmaschine 1 in Ausgestaltung einer Kreissäge. Die Kreissäge 1 enthält dabei eine Vorrichtung 10 zur Einstellung des Gehrungswinkels der Kreissäge 1 zur Arbeitsunterlage W.

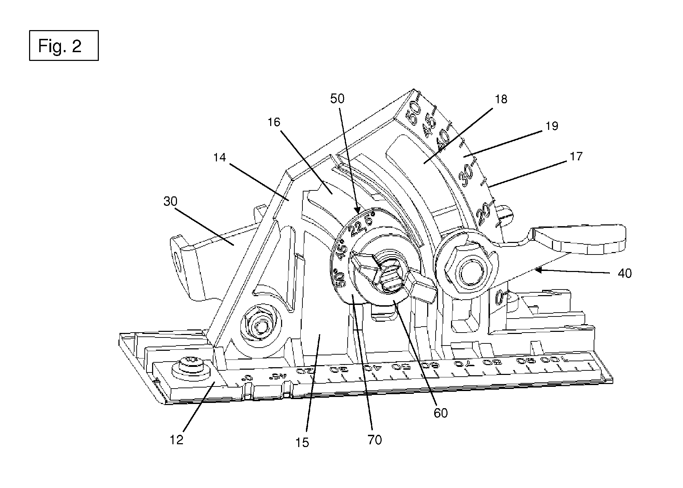

Wie in Fig. 2 gezeigt, enthält die Vorrichtung 10 zur Einstellung des Gehrungswinkels im Wesentlichen eine Grundplatte 12, einen Klemmbock 14, einen Schwenkhebel 30 und einen Einstellmechanismus 50.

Die Grundplatte 12 der Vorrichtung 10 ist dabei Bestandteil der Arbeitsplatte 2 der Kreissäge 1 (vgl. Fig. 1).

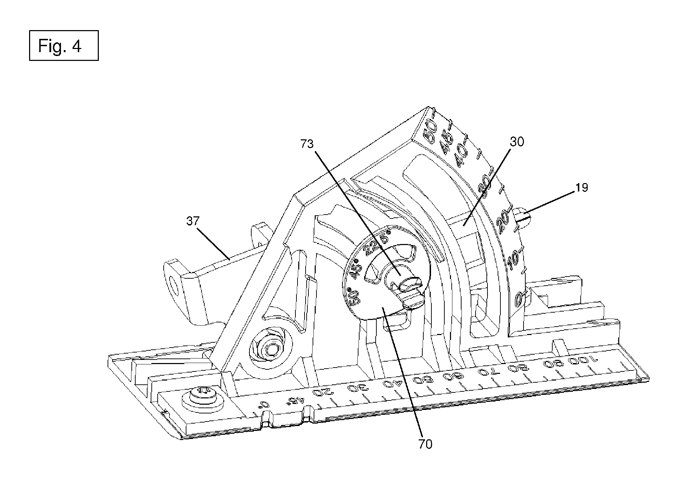

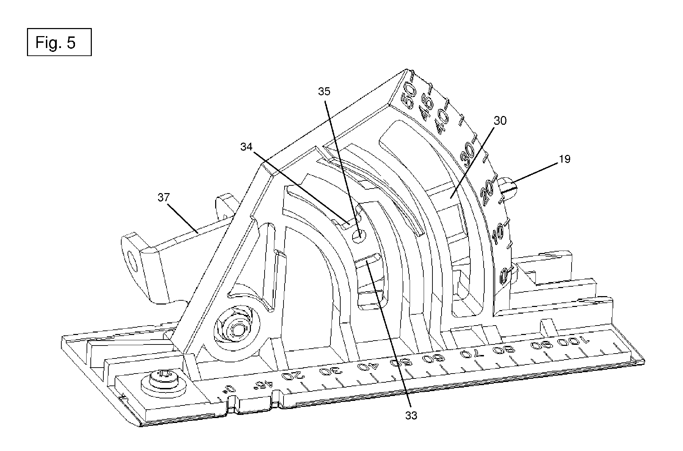

Der Klemmbock 14 ist rechtwinklig zu der Grundplatte 12 sowie zu der Arbeitsplatte 2 der Kreissäge 1 positioniert. Der Klemmbock 14 ist dabei im Wesentlichen als sektorförmige Platte 15 ausgestaltet und enthält ein erstes Langloch 16 und ein zweites Langloch 18. Sowohl das erste Langloch 16 als auch das zweite Langloch 18 sind leicht gebogen. An der Kreisbogenkante 17 der Platte 15 ist eine Skala 19 zur Anzeige des Gehrungswinkels vorgesehen (vgl. Fig. 1 bis 5). Wie insbesondere in Fig. 5 gezeigt, weist das erste Langloch 16 ein erstes Anschlagelement 20, ein zweites Anschlagelement 22 und ein drittes Anschlagelement 24 auf.

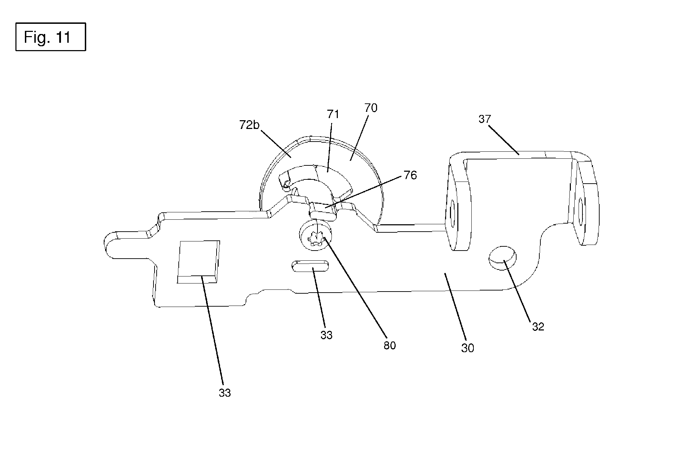

Wie insbesondere in Fig. 11 dargestellt, ist der **Schwenkhebel** 30 im Wesentlichen in Form eines länglichen Stabs 31 mit einem ersten Ende 31 a und einen zweiten Ende 31b ausgestaltet. Darüber hinaus enthält der Schwenkhebel 30 eine erste kreisförmige Öffnung 32, eine erste längliche Aussparung 33 und eine zweite längliche Aussparung 34, eine zweite kreisförmige Öffnung 35 sowie eine rechtwinklige Öffnung 36. Des Weiteren weist der Schwenkhebel 30 eine Aufnahmeeinrichtung 37 zur Aufnahme der restlichen Kreissäge 1 aus.

An dem ersten Ende 31a ist der Schwenkhebel 30 durch die erste kreisförmige Öffnung 32 drehbar mit bzw. schwenkbar zu dem Klemmbock 14 befestigt. Der Schwenkhebel 30 kann im Wesentlichen über die gesamte Breite des Klemmbocks 14 geschwenkt werden. An dem zweiten Ende 31 b des Schwenkhebels 30 ist eine Spitze 38 in Form eines Fingers positioniert. Die Spitze 38 dient dazu den eingestellten Gehrungswinkel an der Anzeigeskala 19 des Klemmbocks 14 anzuzeigen.

In der Nähe des zweiten Endes 31b ist die rechtwinklige Öffnung 36 positioniert, welche dazu vorgesehen ist eine Klemmeinrichtung 40 aufzunehmen. Die Klemmeinrichtung 40 ist im dem zweiten Langloch 18 des Klemmbocks 14 positioniert und dient dazu den Schwenkhebel 30 und damit die restliche Kreissäge 1 in dem ausgewählten Gehrungswinkel lösbar zu halten.

Zwischen dem ersten Ende 31 a und dem zweiten Ende 31 b sind die erste und die zweite längliche Aussparung 33, 34 sowie die zweite kreisförmige Öffnung 35 positioniert. Die erste und die zweite längliche Aussparung 33, 34 sowie die zweite kreisförmige Öffnung 35 sind dazu vorgesehen, den Einstellmechanismus 50 aufzunehmen. Der Einstellmechanismus 50 ist dabei in dem ersten Langloch 16 des Klemmbocks 14 positioniert (vgl. Fig. 2 bis 5).

Der Einstellmechanismus 50 enthält im Wesentlichen ein **Hebelelement** 60 sowie ein **Anzeige- und Begrenzungselement** 70.

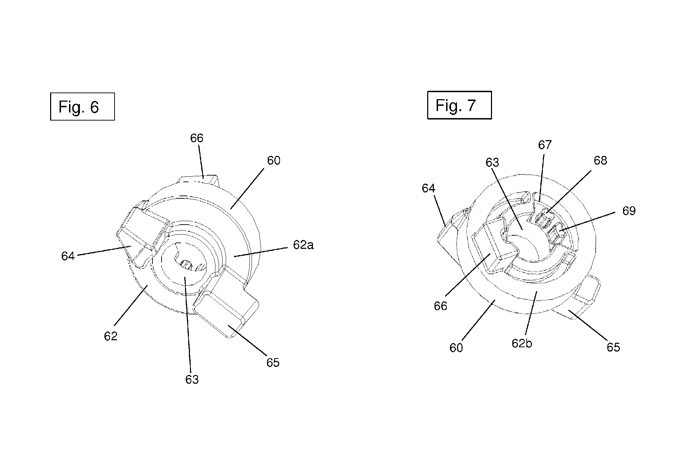

Wie in Fig. 6 und 7 gezeigt, enthält das **Hebelelement** 60 wiederum einen zylindrischen Grundkörper 62 mit einer zentralen Aussparung 63. An der ersten Oberfläche 62a des zylindrischen Grundkörpers 62 sind eine erste Erhebung 64 und eine zweite Erhebung 65 angebracht. Beide Erhebungen 64, 65 dienen dazu den Einstellmechanismus 50 zu greifen und diesen manuell auf einen bestimmten maximalen Gehrungswinkel einzustellen. Die erste Erhebung 64 weist eine spitz zulaufende Form (Pfeilform) auf, die als Anzeigemittel für den ausgewählten maximalen Gehrungswinkel vorgesehen ist.

An der zweiten Oberfläche 62b des zylindrischen Grundkörpers 62 ist ein als Erhebung ausgestaltetes Gegenanschlagelement 66 positioniert (vgl. Fig. 7). Das Gegenanschlagelement 66 dient als Gegenanschlag für jeweils ein Anschlagelement 20, 22, 24 des ersten Langlochs 16 in dem Klemmbock 14. Darüber hinaus weist die zweite Oberfläche 62b des zylindrischen Grundkörpers 62 eine Vertiefung 67 auf, die zwei Erhebungen 68, 69 enthält. Die beiden Erhebungen 68, 69 bestehen aus einem elastischen Material, das eine gewisse Verformung der beiden Erhebungen 68, 69 erlaubt.

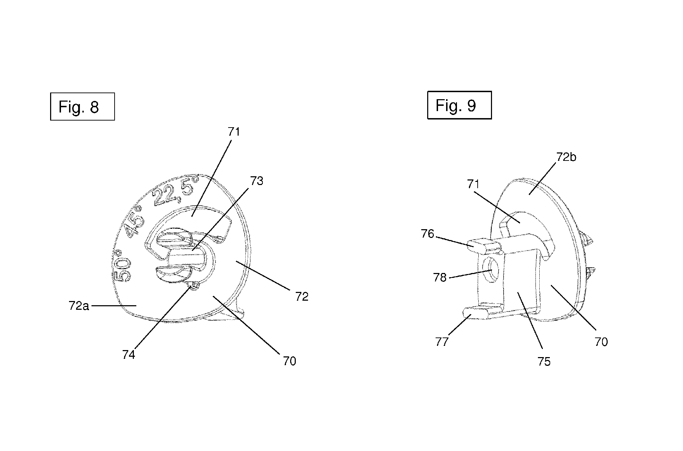

Wie in Fig. 8 und 9 dargestellt, besteht das **Anzeige- und Begrenzungselement** 70 im Wesentlichen aus einem scheibenförmigen Grundkörper 72. Der Grundkörper 72 enthält eine erste Oberfläche 72a, und eine zweite Oberfläche 72b. Darüber hinaus enthält die Anzeige- und Begrenzungselement 70 eine bogenförmige Aussparung 71, welche dazu dient das Gegenanschlagelement 66 des Hebelelements 60 aufzunehmen sowie dieses zu Führen und dessen Drehbewegung relativ zum Anzeige- und Begrenzungselement 70 zu begrenzen.

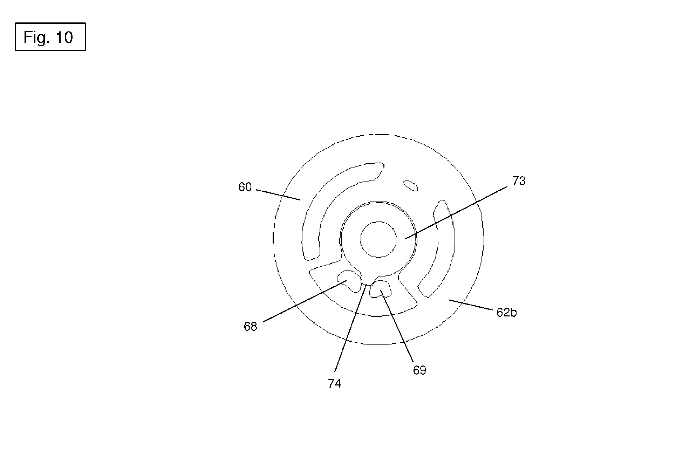

An der ersten Oberfläche 72a befinden sich als Anzeigeskala 72c drei Winkelanzeigen, nämlich 22,5°, 45° und 50°, die als maximaler Gehrungswinkel der Kreissäge 1 gewählt werden können. An der ersten Oberfläche 72a ist ein Lagerstift 73, der zur Aufnahme des Hebelelements 60 vorgesehen ist. Am Fuße des Lagerstifts 73 ist eine als kleine Erhebung ausgestaltete Rastfläche 74 positioniert. Die Rastfläche 74 besteht aus einem steifen Material und ist so ausgestaltet, dass diese mit einem gewissen Kraftaufwand an den beiden Erhebungen 68, 69 in der Vertiefung 67 des zylindrischen Grundkörpers 62 des Hebelelements 60 vorbeibewegt bzw. zwischen diesen beiden Erhebungen 68, 69 positioniert werden kann, wenn das Hebelelement 60 sowie das Anzeige- und Begrenzungselement 70 miteinander in Verbindung stehen (vgl. Fig. 10). Das Zusammenspiel von der Rastfläche 74 des Lagerstifts 73 und der beiden Erhebungen 68, 69 dient zum Einen dazu ein zu leichtes Drehen bzw. versehentliches Verdrehen des Hebelelements 60 relativ zu dem Anzeige- und Begrenzungselement 70 zu verhindern, indem die Erhebungen 68, 69 eine gewissen Widerstand bieten, und zum Anderen dem Hebelelement 60 eine gewisse Halte- bzw. Führungsposition zum Einstellen des gewählten maximalen Gehrungswinkel zu geben.

An der zweiten Oberfläche 72b des Grundkörpers 72 des Anzeige- und Begrenzungselements 70 ist eine rechtwinklige Erhebung 75 positioniert. Die Erhebung 75 weist ein erstes Ende 75a und ein zweites Ende 75b auf. Mit dem ersten Ende 75a ist die Erhebung 75 an der zweiten Oberfläche 72b des Grundkörpers 72 befestigt. An dem zweiten Ende 75b befinden sich zwei Nasenelemente 76, 77. Des Weiteren ist in der rechtwinkligen Erhebung 75 eine Sackbohrung 78 enthalten.

Die beiden Nasenelemente 76, 77 dienen dazu in die erste und zweite längliche Aussparung 33, 34 des Schwenkhebels 30 eingeführt zu werden. Die Sackbohrung 78 dient dazu eine Schraube 80 aufzunehmen, die durch die zweite kreisförmige Öffnung 35 des Schwenkhebels 30 getrieben ist. Mit Hilfe der Nasenelemente 76, 77 in den länglichen Aussparungen 33, 34 und der Schraube 80 in der Sackbohrung 78 werden das Anzeige- und Begrenzungselement 70 und insgesamt der Einstellmechanismus 50 an dem Schwenkhebel 30 befestigt.

Im zusammengebauten Zustand der Vorrichtung zur Einstellung des Gehrungswinkels ist der Klemmbock 14 senkrecht auf der Grundplatte 12 befestigt.

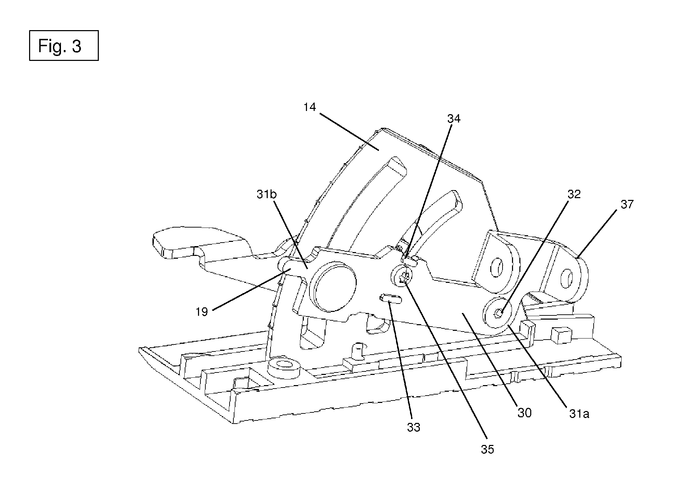

Wie in Fig. 3 gezeigt, ist der Schwenkhebel 30 durch die erste kreisförmige Öffnung 32 drehbar mit bzw. schwenkbar mit dem Klemmbock 14 verbunden. Die zweite kreisförmige Öffnung 35 des Schwenkhebels 30 befindet sich dabei in Übereinstimmung mit dem ersten Langloch 16 des Klemmbocks 14 (vgl. Fig. 5). Wie bereits vorstehend beschrieben wird der Einstellmechanismus 50 an der zweiten kreisförmigen Öffnung 35 mit dem Schwenkhebel 30 befestigt. Zur Befestigung des Einstellmechanismus 50 wird, wie in Fig. 11 gezeigt, das Anzeige- und Begrenzungselement 70 mit dem Schwenkhebel 30 verschraubt. Die beiden Nasenelemente 76, 77 werden zur Führung des Anzeige- und Begrenzungselements 70 in die erste und zweite längliche Aussparung 33, 34 gesteckt. Das Anzeige- und Begrenzungselement 70 ist drehfest mit dem Schwenkhebel 30 und dem Klemmbock 14 verbunden.

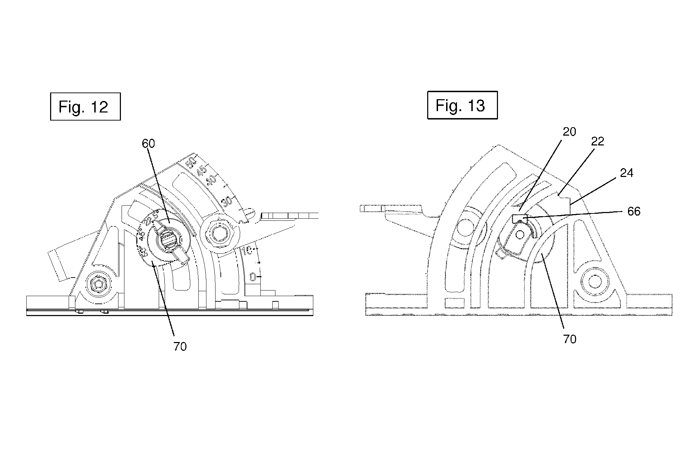

Auf den Lagerstift 73 wird das Hebelelement 60 so gesteckt, dass das Gegenanschlagelement 66 oberhalb des Schwenkhebels 30 und in der Aussparung 71 sowie in dem ersten Langloch 16 des Klemmbocks 14 positioniert ist. Das Hebelelement 60 ist drehbar zum Schwenkhebel 30 und Klemmbock 14 positioniert. Durch Drehen des Hebelelements 60 wird ein maximaler Gehrungswinkel eingestellt (erste Erhebung 64 mit der spitz zulaufenden Form auf entsprechende Markierung der Skala (Winkelanzeigen 22,5°, 45° und 50°) des Anzeige- und Begrenzungselements 70) und gleichzeitig das Gegenanschlagelement 66 in dem ersten Langloch 16 des Klemmbocks 14 so ausgerichtet, dass das Gegenanschlagelement 66 an das Anschlagelement 20, 22, 24 anschlägt, dass dem ausgewählten maximalen Gehrungswinkel entspricht. Wie Fig. 12 zu entnehmen ist, ist mittels des Hebelelements 60 als maximaler Gehrungswinkel der Wert von 22,5° ausgewählt. Wie in Fig. 13 gezeigt, ist entsprechend dazu das Gegenanschlagelement 66 so in dem ersten Langloch 16 ausgerichtet, dass das Gegenanschlagelement 66 an dem ersten Anschlagelement 20 anschlägt. Die Kreissäge 1 befindet sich damit in einem Gehrungswinkel von 22,5°.

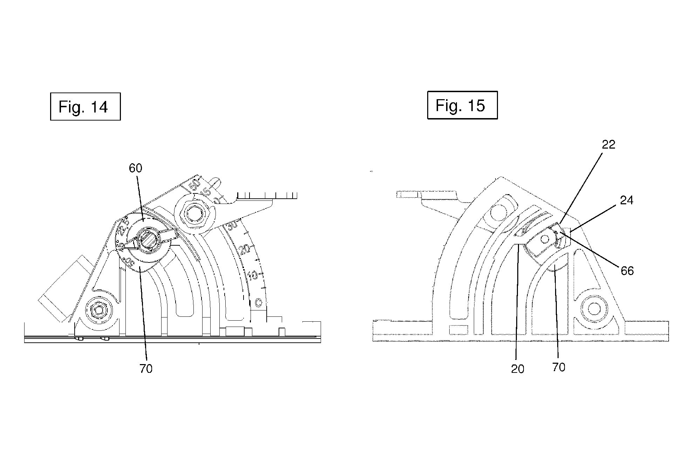

Wie Fig. 14 zu entnehmen ist, ist mittels des Hebelelements 60 als maximaler Gehrungswinkel der Wert von 45° ausgewählt. Wie in Fig. 15 gezeigt, ist entsprechend dazu das Gegenanschlagelement 66 so in dem ersten Langloch 16 ausgerichtet, dass das Gegenanschlagelement 66 an dem zweiten Anschlagelement 22 anschlägt. Die Kreissäge 1 befindet sich damit in einem Gehrungswinkel von 45°.

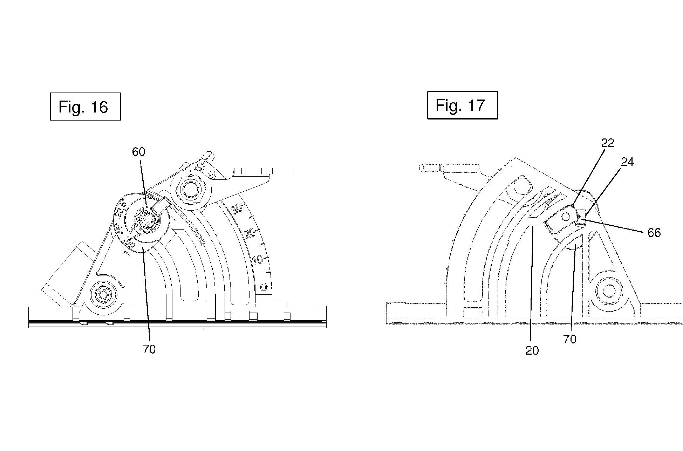

Wie Fig. 16 zu entnehmen ist, ist mittels des Hebelelements 60 als maximaler Gehrungswinkel der Wert von 50° ausgewählt. Wie in Fig. 17 gezeigt, ist entsprechend dazu das Gegenanschlagelement 66 so in dem ersten Langloch 16 ausgerichtet, dass das Gegenanschlagelement 66 an dem dritten Anschlagelement 24 anschlägt. Die Kreissäge 1 befindet sich damit in einem Gehrungswinkel von 50°.

Es gilt zu beachten, dass in den Fig. 12 bis 17 der Schwenkhebel 30 nicht gezeigt bzw. ausgeblendet ist.

Nachdem der maximale Gehrungswinkel eingestellt wurde, wird dieser mit Hilfe der Klemmeinrichtung 40 fixiert, sodass die Kreissäge 1 in dem ausgewählten Gehrungswinkel gehalten ist und mit der Kreissäge 1 entsprechend gearbeitet werden kann.

## Patentansprüche

1. Vorrichtung (10) zur Einstellung des Gehrungswinkels einer Werkzeugmaschine (1), insbesondere einer Kreissäge, enthaltend
- Klemmbock (14) mit wenigstens einem Langloch (16, 18); und
- Schwenkhebel (30), an dem die Werkzeugmaschine (1) montierbar ist und der um einen Schwenkpunkt (32) gelagert relativ zum Klemmbock (14) zwischen einen minimalen Gehrungswinkel und einem maximalen Gehrungswinkel schwenkbar ist,
**dadurch gekennzeichnet, dass** das Langloch (16) wenigstens zwei versetzt zueinander positionierte Anschlagelemente (20, 22, 24) enthält und ein Einstellmechanismus (50) mit einem Hebelelement (60) zur Auswahl eines maximalen Gehrungswinkels vorgesehen ist, wobei das Hebelelement (60) ein Gegenanschlagelement (66) enthält, welches entsprechend der Drehausrichtung des Hebelelements (60) so ausrichtbar ist, dass das Gegenanschlagelement (66) an das jeweilige Anschlagelement (20, 22, 24) entsprechend dem ausgewählten maximalen Gehrungswinkel anschlagbar ist, wodurch die Schwenkbewegung des Schwenkhebels (30) relativ zum Klemmbock (14) zur Einstellung des maximalen Gehrungswinkels begrenzbar ist.

2. Vorrichtung (10) nach Anspruch 1,
**dadurch gekennzeichnet, dass** der Einstellmechanismus (50) ein Anzeige- und Begrenzungselement (70) enthält, welches eine Anzeigenskala (72c) sowie eine längliche Aussparung (71) enthält, wobei die Anzeigenskala (72c) zur Anzeige der wählbaren maximalen Gehrungswinkel dient und die längliche Aussparung (71) zur Führung sowie Begrenzung der Drehbewegung des Gegenanschlagelements (66) dient.
